# EUROPÄISCHE PATENTSCHRIFT

(11) **EP 0 544 235 B1**
(45) Veröffentlichungstag und Bekanntmachung des Hinweises auf die Patenterteilung: **31.01.1996**
(21) Anmeldenummer: 92119997.2
(22) Anmeldetag: 24.11.1992
(51) Int. Cl.: B60C 11/11, B60C 11/04

(54) **Laufflächenprofil für einen Fahrzeugreifen**
Tyre tread
Bande de roulement pour pneumatique

(30) Priorität: 25.11.1991 DE 4138688
(43) Veröffentlichungstag der Anmeldung: 02.06.1993
(73) Patentinhaber: PIRELLI REIFENWERKE GmbH, D-64739 Höchst (DE)
(72) Erfinder: Overhoff, Dietrich, Dr., W-6114 Gross-Umstadt (DE); Sallein, Otto, W-6127 Breuberg/Odenwald (DE)
(74) Vertreter: Seibert, Hannelore

(56) Entgegenhaltungen:
- FR-A- 782 332
- FR-A- 2 283 018
- FR-A- 2 635 051
- FR-A- 2 640 913
- US-A- 3 177 917

## Beschreibung

Die Erfindung bezieht sich auf ein Laufflächenprofil für einen Fahrzeugreifen mit mindestens einer in Umfangsrichtung verlaufenden Längsrille und von der Längsrille ausgehenden Querrillen, zwischen denen Profilblöcke abgegrenzt sind, die im Randbereich sägezahnförmige Ansätze aufweisen.

Bei einer derartigen Profilgestaltung ist die Längsrille maßgebend für die Seitenstabilität und für die Vermeidung von Aquaplaning eines solchen Reifens, während die Querrillen Antriebs-, Kurven- und Bremskräfte besser übertragen, wobei diese Querrillen senkrecht oder schräg geneigt zur umlaufenden Längsrille verlaufen können. Zusätzlich können die Profilblöcke noch eine Feinlamellierung für eine bessere Griffigkeit aufweisen, insbesondere bei Winterreifen.

Wesentlich für die Übertragung der Antriebs- und Bremskräfte sind dabei vor allem quer verlaufende Profilkanten, die mit dem Boden in Berührung kommen. Einer zu starken Unterteilung eines Laufflächenprofils durch Querrillen sind jedoch konstruktive Grenzen gesetzt.

Aus der FR-A-2 640 913 ist ein Laufflächenprofil bekannt, dessen Profilblöcke durch Längsrillen und Querrillen begrenzt sind. An den Seitenflächen der Profilblöcke, die den Längsrillen zugewandt sind, sind sägezahnförmige Ansätze vorgesehen. Diese erstrecken sich mit gleicher Breite von der Profiloberfläche bis zum Rillengrund.

Aus der FR-A-782 332 ist ein weiteres Laufflächenprofil bekannt, das durch Längs- und Querrillen abgegrenzte Profilblöcke aufweist. Im Bereich der Längsrillen besitzen die Profilblöcke seitliche Ansätze, die in die Längsrille ragen. Die seitlichen Ansätze haben näherungsweise eine dreieckförmige Grundfläche. Von der Profiloberfläche bis zum Rillengrund sind die seitlichen Ansätze mit gleicher Breite ausgeführt. An den benachbarten Profilblöcken sind zu den seitlichen Ansätzen korrespondierende Aussparungen vorgesehen.

Der vorliegenden Erfindung liegt die Aufgabe zugrunde, bei einer nicht zu starken Unterteilung eines Laufflächenprofils durch Querrillen die Übertragung der Antriebs- und Bremskräfte zu erhöhen.

Zur Lösung dieser Aufgabe wird ein Laufflächenprofil mit den Merkmalen des Patentanspruches 1 vorgeschlagen. Bei dem erfindungsgemäßen Laufflächenprofil sind die Profilblöcke mit einem in die Umfangsrille ragenden Blockansatz versehen, der sich von der Profiloberfläche bis in den Rillengrund der Längsrille erstreckt, und an den innenliegenden Seitenflächen der Blockansätze sind die Sägezahnförmigen Ansätze vorgesehen, die sich zum Rillengrund hin V-förmig erweitern.

Durch derartige in die Längsrillen ragende Blockansätze, die sich nicht über die gesamte Länge eines Profilblockes erstrecken, werden an den so entstehenden Rückschnitten auf die normale Längsrillenbreite zusätzliche, quer verlaufende Kanten für den Antrieb und das Bremsen erhalten, so daß damit die entsprechenden Kräfte besser übertragen werden können. Durch die an den innenliegenden Seitenflächen der Blockansätze zusätzlich vorgesehenen sägezahnförmigen Ansätze, die sich zum Rillengrund hin V-förmig erweitern, werden zusätzliche Kanten für die Übertragung von Antriebs- und Bremskräften geschaffen. Hierdurch ergibt sich eine erhebliche Verbesserung der Traktion eines solchen Reifens, insbesondere auf verschneiten Straßen, sowie eine erheblich bessere Bremsverzögerung, so daß damit insgesamt die Sicherheit eines solchen Reifen optimiert wird.

Zweckmäßigerweise beträgt die Länge eines solchen Blockansatzes etwa ½ bis ¾ der Länge eines Profilblockes - in Umlaufrichtung der Längsrille gesehen. Die Breite eines solchen Blockansatzes sollte maximal ¼ der Breite der Längsrille betragen.

Zweckmäßigerweise sind diese Blockansätze mittig zu den Profilblöcken angeordnet; es ist aber auch eine andere Zuordnung möglich.

Dabei können bei angenähert V-förmigem Querschnitt der Längsrille die innenliegende Seitenfläche der Blocksansätze einen geringeren Neigungswinkel als die Seitenfläche der Längsrille aufweisen.

Anhand einer schematischen Zeichnung sind Aufbau und Funktionsweise von Ausführungsbeispielen nach der Erfindung näher erläutert. Dabei zeigen:
- Figur 1: eine Aufsicht auf einen Profilausschnitt im Bereich einer Längsrille mit in diese hineinragenden Blockansätzen,
- Figur 2: einen Querschnitt durch das Profil nach Figur 1 entlang der Schnittlinie II-II,
- Figur 3: eine Aufsicht auf einen erfindungsgemäßen Profilausschnitt im Bereich einer Längsrille mit sägezahnförmigen Ansätzen an den Blockansätzen,
- Figur 4: einen Querschnitt durch das Profil nach Figur 3 entsprechend der Schnittlinie IV-IV,
- Figur 5: die perspektivische Ansicht der Profilgestaltung entsprechend Figur 1 und
- Figur 6: die perspektivische Ansicht einer Profilgestaltung entsprechend Figur 3.

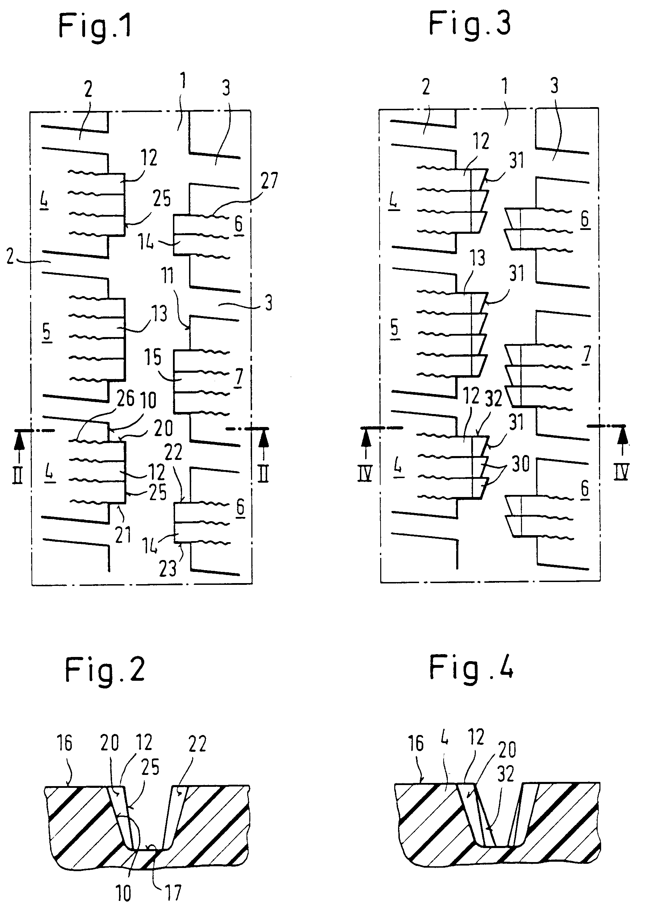

Figur 1 zeigt eine Aufsicht auf einen Laufflächenprofilausschnitt im Bereich einer in Umfangsrichtung verlaufenden Längsrille 1, von der nach der einen Seite Querrillen 2 und - zweckmäßigerweise dazu versetzt - nach der anderen Seite Querrillen 3 ausgehen. Zwischen diesen Querrillen 2 und 3 sind auf der einen Seite Profilblöcke 4 und 5 und auf der anderen Seite Profilblöcke 6 und 7 vorgesehen, die entsprechend der unterschiedlichen Numerierung auch unterschiedliche Länge parallel zur Längsrille 1 aufweisen können.

Die Profilblöcke 4 und 5 bzw. 6 und 7 weisen im mittleren Bereich ihrer die Längsrille begrenzenden Seitenflächen 10 bzw. 11 in die Längsrille 1 ragende Blockansätze 12 und 13 bzw. 14 und 15 auf, die sich - wie man aus dem Querschnitt entsprechend der Schnittlinie II-II nach Figur 1 in Figur 2 ersieht - von der Profiloberfläche 16 bis zum Längsrillengrund 17 erstrecken.

Durch diese Blockansätze 12 und 13 bzw. 14 und 15 ergeben sich somit an den Rückschnitten zu den eigentlichen Profilblöcken 4 und 5 bzw. 6 und 7 zusätzliche quer verlaufende Kanten 20 und 21, mit denen zusätzlich zu den Querrillen 2 begrenzenden Kanten Antriebs- und Bremskräfte übertragen werden können.

Die Länge eines solchen Blockansatzes 12 und 13 bzw. 14 und 15 sollte etwa ½ bis ¾ der Länge eines Profilblockes 4, 5 oder 6, 7 betragen, wobei bei längeren Profilblöcken 5 und 7 auch die entsprechenden Blockansätze 13 und 15 entsprechend länger sein können.

Es ist jedoch auch eine andere, insbesondere nichtmittige oder auch geteilte Anordnung der Blockansätze an den Profilblöcken möglich.

Üblicherweise sind die Seitenwände 10 der Längsrille 1 V-förmig nach unten zulaufend aufgebildet. Die entsprechende Seitenfläche 25 eines solchen Blockansatzes 12 kann dabei eine geringere Neigung als die der Seitenfläche 10 der Längsrille 1 aufweisen, insbesondere bei relativ schmalen Längsrillen. Bei breiteren Längsrillen ist jedoch auch ein anderes Winkelverhältnis möglich.

Zusätzlich weist dieses Profil noch eine Feinlamellierung 26 und 27 auf, die sich bis in die Blockansätze 12 und 13 bzw. 14 und 15 erstreckt.

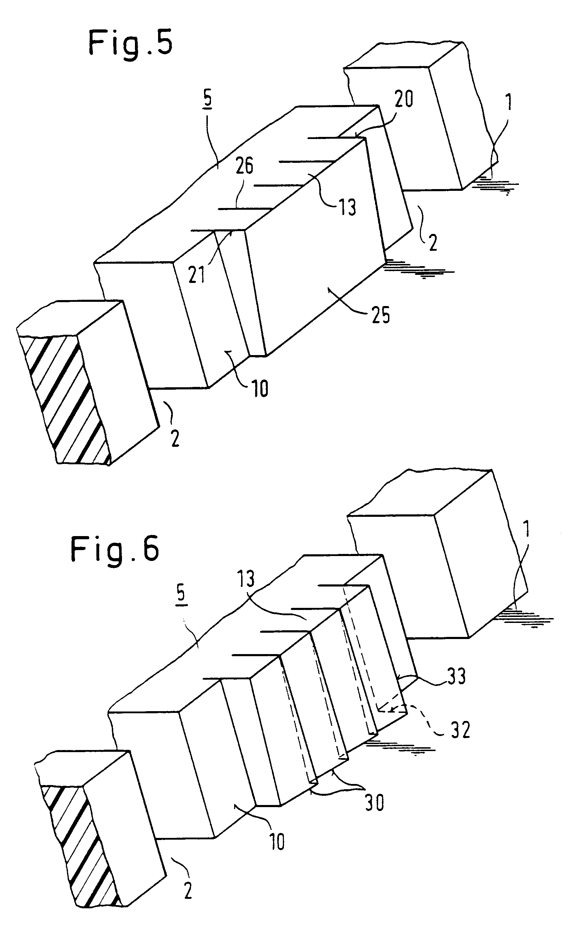

Figur 5 zeigt zur deutlicheren Darstellung noch eine perspektivische Ansicht einer die Längsnut 1 begrenzenden Seitenfläche, beispielsweise des Profilblockes 5 mit den diesen begrenzenden Querrillen 2 sowie dem in die Längsrillle 1 ragenden Blockansatz 13 zur Schaffung entsprechender Querkanten 20 und 21.

Wie bereits ausgeführt, besteht ein wesentliches Merkmal der Erfindung in der Schaffung zusätzlicher Querkanten, um entsprechende Kräfte besser übertragen zu können. Erfindungsgemäß wird dies durch die insbesondere aus den Figuren 3, 4 und 6 zu ersehenden konstruktiven Maßnahmen erreicht. Danach weisen die Blockansätze 12 und 13 bzw. 14 und 15 auf ihren innenliegenden Seitenflächen 25 zusätzliche, sich zum Längsrillengrund 17 V-förmig erweiternde Ansätze 30 auf, die in Längsrichtung der Längsrille 1 durch entsprechend geneigte Flächen 31 sägezahnförmig gestuft sind.

Besonders deutlich läßt sich dies aus der perspektivischen Ansicht nach Figur 6 ersehen. Danach können die Ansätze 30 glatt von der Oberkante des Blockansatzes 13 ausgehen und erstrecken sich V-förmig aufweitend und sägezahnförmig abgestuft nach unten zum Nutgrund, so daß sich dadurch zusätzliche Kanten 32 ergeben, wie sie in Figur 6 gestrichelt angedeutet sind. Die Sägezahnspitzen 33 der einzelnen Ansätze können dabei zweckmäßigerweise den gleichen Neigungswinkel wie die Längsrillen-Seitenflächen 10 haben

Derartige Ansätze können aber auch in gleicher Weise in schräg verlaufenden Querrillen angeordnet sein, was in der Zeichnung jedoch nicht gesondert dargestellt ist.

Mit den dadurch erreichten zusätzlichen Querkanten 32, die sich zum Längsrillengrund erweitern, können dabei insbesondere bei Tiefschnee zusätzliche Wirkungsflächen und -kanten geschaffen werden, um Antriebs- und Bremskräfte noch besser übertragen zu können.

Vorstehend ist im wesentlichen das Grundprinzip einer solchen zusätzlichen Profilgestaltung beschrieben worden. Selbstverständlich sind konstruktive Abänderungen bezüglich Profilblockgröße, Verlauf und Anordnung von Querrillen, Größe, Tiefe und Anzahl von Längsrillen möglich, ohne daß dabei der Grundgedanke der Erfindung verlassen wird.

## Patentansprüche

1. Laufflächenprofil für einen Fahrzeugreifen mit mindestens einer in Umfangsrichtung verlaufenden Längsrille (1) und von der Längsrille (1) ausgehenden Querrillen (2, 3), zwischen denen Profilblöcke (4, 5, 6, 7) abgegrenzt sind, die im Randbereich sägezahnförmige Ansätze (30) aufweisen, dadurch gekennzeichnet, daß die Profilblöcke (4, 5, 6, 7) an den die Längsrille (1) begrenzenden Seitenflächen (10) jeweils einen in die Längsrille (1) ragenden Blockansatz (12, 13, 14, 15) aufweisen, der sich von der Profiloberfläche bis in den Rillengrund (17) der Längsrille (1) erstreckt und daß an den innenliegenden Seitenflächen (25) der Blockansätze (12, 13, 14, 15) die sägezahnförmigen Ansätze (30) vorgesehen sind, die sich zum Rillengrund (17) hin V-förmig erweitern.

2. Laufflächenprofil nach Anspruch 1, dadurch gekennzeichnet, daß die Länge eines Blockansatzes (12, 13; 14, 15) etwa 1/2 bis 3/4 der Länge eines Profilblockes (4, 5; 6, 7) - in Umlaufrichtung der Längsrille (1) gesehen - beträgt.

3. Laufflächenprofil nach Anspruch 1 oder 2, dadurch gekennzeichnet, daß die Blockansätze (12,13; 14, 15) mittig zu den Profilblöcken (4, 5; 6, 7) angeordnet sind.

4. Laufflächenprofil nach Anspruch 1, 2 oder 3, dadurch gekennzeichnet, daß die Breite eines Blockansatzes (4, 5; 6, 7) etwa maximal 1/4 der Breite der Längsrille (1) beträgt.

5. Laufflächenprofil nach Anspruch 1, dadurch gekennzeichnet, daß bei angenähert V-förmigem Querschnitt der Längsrille (1) die innenliegende Seitenfläche (25) der Blockansätze (4, 5; 6, 7) einen geringeren Neigungswinkel als die Seitenfläche (10) der Längsrille (1) aufweist.

6. Laufflächenprofil nach Anspruch 1, dadurch gekennzeichnet, daß in der Lauffläche (16) angeordnete Lamellen (26) sich bis in die Blockansätze (12, 13; 14, 15) erstrecken.

7. Laufflächenprofil nach Anspruch 6, dadurch gekennzeichnet, daß der Neigungswinkel einer Sägezahnspitze (33) der Ansätze (30) gleich dem Neigungswinkel der Längsrillen-Seitenfläche (10) ist.

8. Laufflächenprofil nach Anspruch 7, dadurch gekennzeichnet, daß die Ansätze (30) mit der Oberkante der Blockansätze (12, 13; 14, 15) bündig abschließen.

## Claims

1. Tyre tread with at least one longitudinal groove (1) running in the circumferential direction and transverse grooves (2, 3) originating from the longitudinal groove (1), between which tread blocks (4, 5, 6, 7) which have sawtooth-shaped projections (30) in the edge area are delimited, characterized in that at the lateral surfaces (10) limiting the longitudinal groove (1) the tread blocks (4, 5, 6, 7) have a block projection (12, 13, 14, 15) in each case projecting into the longitudinal groove (1), which block projection extends from the tread surface as far as the groove base (17) of the longitudinal groove (1) and that the sawtooth-shaped projections (30) which extend in a V-shape towards the groove base (17) are provided on the internal lateral surfaces (25) of the block projections (12, 13, 14, 15).

2. Tread according to Claim 1, characterized in that the length of a block projection (12, 13; 14, 15) is approx. 1/2 to 3/4 of the length of a tread block (4, 5; 6, 7) - viewed in the circumferential direction of the longitudinal groove (1).

3. Tread according to Claim 1 or 2, characterized in that the block projections (12, 13; 14, 15) are arranged centrally with respect to the tread blocks (4, 5; 6, 7).

4. Tread according to Claim 1, 2 or 3, characterized in that the width of a block projection (4, 5; 6, 7) is approximately 1/4 maximum of the width of the longitudinal groove (1).

5. Tread according to Claim 1, characterized in that with an approximately V-shaped cross-section of the longitudinal groove (1), the internal lateral surface (25) of the block projections (4, 5; 6, 7) has a smaller angle of inclination than the lateral surface (10) of the longitudinal groove (1).

6. Tread according to Claim 1, characterized in that laminations (26) arranged in the tread (16) extend into the block projections (12, 13; 14, 15).

7. Tread according to Claim 6, characterized in that the angle of inclination of a sawtooth tip (33) of the projections (30) is equal to the angle of inclination of the longitudinal groove lateral surface (10).

8. Tread according to Claim 7, characterized in that the projections (30) end flush with the upper edge of the block projections (12, 13; 14, 15).

## Revendications

1. Profil de bande de roulement pour un pneumatique de véhicule, comportant au moins une rainure longitudinale (1) s'étendant en direction périphérique et des rainures transversales (2, 3) partant de la rainure longitudinale (1), entre lesquelles sont délimités des blocs profilés (4, 5 ; 6, 7) qui présentent dans la région de bordure des talons en forme de dent de scie (30), caractérisé en ce que les blocs profilés (4, 5 ; 6, 7) présentent sur les surfaces latérales (10) délimitant la rainure longitudinale (1) chacun un talon de bloc (12, 13 ; 14, 15) pénétrant dans la rainure longitudinale (1), qui s'étend depuis la surface de profil jusque dans le fond (17) de la rainure longitudinale (1), et en ce qu'il est prévu sur les surfaces latérales intérieures (25) des talons de bloc (12, 13 ; 14, 15) des talons en forme de dent de scie (30) qui s'élargissent en forme de V vers le fond (17) de la rainure.

2. Profil de bande de roulement selon la revendication 1, caractérisé en ce que la longueur d'un talon de bloc (12, 13 ; 14, 15) s'élève environ à la moitié jusqu'à trois quarts de la longueur d'un bloc profilé (4, 5 ; 6, 7) - vue en direction périphérique de la rainure longitudinale (1).

3. Profil de bande de roulement selon l'une ou l'autre des revendications 1 et 2, caractérisé en ce que les talons de bloc (12, 13 ; 14, 15) sont agencés au milieu par rapport aux blocs profilés (4, 5 ; 6, 7).

4. Profil de bande de roulement selon l'une quelconque des revendications 1, 2 et 3, caractérisé en ce que la largeur d'un talon de bloc (4, 5 ; 6, 7) s'élève au maximum environ à un quart de la largeur de la rainure longitudinale (1).

5. Profil de bande de roulement selon la revendication 1, caractérisé en ce que pour une section transversale approximativement en forme de V de la rainure longitudinale (1), la surface latérale intérieure (25) des talons de blocs (4, 5 ; 6, 7) présente un angle d'inclinaison inférieur à celui de la surface latérale (10) de la rainure longitudinale (1).

6. Profil de bande de roulement selon la revendication 1, caractérisé en ce que des lamelles (26) agencées dans la bande de roulement (16) s'étendent jusque dans les talons de bloc (12, 13 ; 14, 15).

7. Profil de bande de roulement selon la revendication 6, caractérisé en ce que l'angle d'inclinaison d'une pointe (33) de dent de scie des talons (30) est égal à l'angle d'inclinaison de la surface latérale (10) de la rainure longitudinale.

8. Profil de bande de roulement selon la revendication 7, caractérisé en ce que les talons (30) se terminent à fleur avec l'arête supérieure des talons de bloc (12, 13; 14, 15).
